(19) Europäisches Patentamt
European Patent Office
Office européen des brevets

(11) **EP 2 182 622 B1**

(12) **FASCICULE DE BREVET EUROPEEN**

(45) Date de publication et mention
de la délivrance du brevet:
**07.08.2013 Bulletin 2013/32**

(51) Int Cl.:
*H02M 1/42* *(2007.01)* *H01F 38/02* *(2006.01)*
*H02M 3/142* *(2006.01)*

(21) Numéro de dépôt: **09306022.6**

(22) Date de dépôt: **28.10.2009**

(54) **Circuit de correction de facteur de puissance.**

Schaltung zur Verbesserung des Leistungsfaktors

Circuit for power factor correction

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **29.10.2008 FR 0857357**

(43) Date de publication de la demande:
**05.05.2010 Bulletin 2010/18**

(73) Titulaire: **GE Energy Power Conversion Technology Limited**
**Rugby**
**Warwickshire CV21 1BU (GB)**

(72) Inventeur: **Permuy, Alfred**
**92500 Rueil Malmaison (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**US-A- 5 726 872**

• **AMARASINGHE K A ET AL: "A resonance power supply that provides dynamic power factor correction in capacitor input off-line converters" 19900311; 19900311 - 19900316, 11 mars 1990 (1990-03-11), pages 563-570, XP010004715**
• **HOFT, R. PATEL, H. DOTE, Y.: "Thyristor series resonant DC-DC chopper" IEEE TRANSACTIONS ON MAGNETICS, vol. 8, no. 3, septembre 1972 (1972-09), pages 286-288, XP002525774**
• **MCMURRAY, W.: "Analysis of thyristor DC chopper power converters including nonlinear commutating reactors" IEEE TRANSACTIONS ON MAGNETICS, vol. 6, no. 1, mars 1970 (1970-03), pages 16-21, XP002525775**
• **WEN-JIAN GU ET AL: "A NEW METHOD TO REGULATE RESONANT CONVERTERS" IEEE TRANSACTIONS ON POWER ELECTRONICS, IEEE SERVICE CENTER, PISCATAWAY, NJ, US, vol. 3, no. 4, 1 octobre 1988 (1988-10-01), pages 430-439, XP000026938 ISSN: 0885-8993**

**Description**

La présente invention concerne un circuit de correction de facteur de puissance, et plus particulièrement un tel circuit comprenant un convertisseur de type Boost comportant un interrupteur commandé par un circuit de commande, un premier condensateur de sortie et une première inductance série d'entrée, une diode étant connectée en série avec ladite première inductance entre l'interrupteur commandé et le condensateur de sortie.

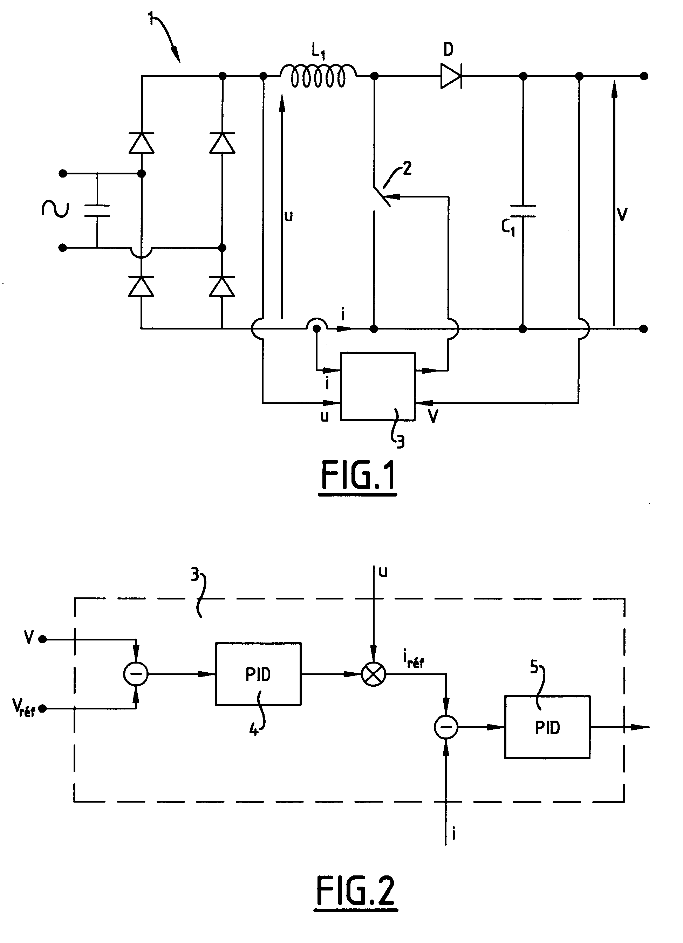

On connaît l'utilisation de convertisseurs de type Boost dans les alimentations à découpage, et plus particulièrement dans les circuits de correction de facteur de puissance (PFC ou *Power factor correction*). Le but d'un tel circuit est d'assurer que la tension et l'intensité d'entrée de l'alimentation sont en phase ou, en d'autres termes, que la tension et l'intensité sont proportionnelles à chaque instant. Les figures 1 et 2 illustrent un tel circuit.

On voit sur la figure 1 un pont redresseur 1 dont la tension de sortie $u$ est appliqué en entrée du convertisseur Boost composé de façon connue d'une inductance série $L_1$ et d'un interrupteur commandé. Une diode D est connectée en série avec l'inductance série $L_1$.et un condensateur de sortie $C_1$ est relié à la diode D. La sortie du circuit est prise à la borne commune à la diode D et au condensateur $C_1$.

L'interrupteur 2 est commandé à l'aide d'un circuit de commande 3 qui reçoit en entrée la tension $u$ de sortie du pont redresseur, la tension V de sortie du circuit PFC, la tension de consigne $V_{ref}$ de sortie de ce même circuit, et le courant i dans le circuit PFC. Ce circuit 3 est décrit plus en détail en référence à la figure 2.

Le circuit 3 soustrait V de $V_{ref}$ de manière à obtenir l'erreur sur la tension de sortie. Cette erreur en tension est appliquée à un régulateur PID (Proportionnel Intégral Dérivé) 4 dont la sortie est multipliée par $u$ de manière à former la consigne d'intensité $i_{ref}$ qui est donc constamment proportionnelle à $u$, de sorte que $i_{ref}$ est en phase avec $u$. Cette intensité $i_{ref}$ est soustraite de $i$ pour obtenir l'erreur en intensité qui est elle-même appliquée à un régulateur PID 5 dont la sortie commande mande l'interrupteur 2 par l'intermédiaire de circuits non représentés appropriés à ce type d'interrupteur.

Les circuits PFC connus de ce type utilisent généralement des transistors MOS comme interrupteurs commandés. Si un tel agencement donne satisfaction dans des convertisseurs de faible puissance, il n'est pas possible de le généraliser au domaine de fortes puissances.

On connaît également, dans l'état de la technique, notamment d'après la publication XP010004715, un circuit de correction de facteur de puissance conforme au préambule de la revendication 1.

On connaît par ailleurs d'autres circuits tels que décrits dans XP002525774, XP002525775, XP000026938 ou US 5 726 872.

Il est par ailleurs bien connu d'utiliser des thyristors comme interrupteurs commandés de puissance. La difficulté avec ces composants réside dans le fait qu'ils ne peuvent s'ouvrir que lorsque le courant qui les traverse s'annule. Or, cette ouverture n'est pas instantanée mais nécessite un certain temps de recouvrement.

La présente invention vise à fournir un circuit PFC de puissance palliant les inconvénients mentionnés ci-dessus liés à l'ouverture des thyristors.

A cet effet, l'invention a tout d'abord pour objet un circuit de correction de facteur de puissance selon la revendication 1.

Dans un mode de réalisation particulier, lesdits moyens d'annulation du courant comprennent un circuit résonnant comportant une deuxième inductance série connectée entre ladite première inductance série et la diode série, et un deuxième condensateur connecté à la borne commune à ladite deuxième inductance série et à la diode série.

Ce circuit, malgré sa simplicité, présente toutefois un inconvénient. En effet, si l'on calcule les valeurs de la deuxième inductance et de la capacité du deuxième condensateur qui permettent d'obtenir le résultat recherché, on constate que, lorsque le courant d'entrée du circuit est faible, le courant du circuit résonnant est surdimensionné et donc le rendement est mauvais.

De plus, s'agissant d'un circuit PFC, la tension d'entrée est simultanément faible (elle est en phase avec l'intensité), de sorte que la fréquence de fonctionnement est élevée ce qui contribue à accroître les pertes.

Le problème du dimensionnement du circuit résonnant est résolu en utilisant une pluralité de circuits élémentaires tels que décrits ci-dessus disposés en parallèle, les circuits élémentaires étant agencés pour pouvoir délivrer des courants de valeur croissante, les circuits de commande des thyristors des circuits élémentaires étant agencés pour rendre successivement conducteurs les différents circuits élémentaires dans l'ordre croissant des courants qu'ils sont susceptibles de délivrer.

Dans un mode de réalisation particulier, les circuits de commande des thyristors des circuits élémentaires sont agencés pour maintenir à l'état conducteur les circuits élémentaires déjà conducteurs lorsqu'un nouveau circuit élémentaire est rendu conducteur.

Lorsque le courant d'entrée augmente, il est ainsi réparti entre les différents circuits élémentaires, chacun de ces circuits pouvant être dimensionné de façon optimale.

En plus il est possible d'améliorer la solution; en utilisant comme deuxième inductance une inductance variable dépendant du courant d'entrée et de valeur élevée lorsque ce courant est faible.

Plus particulièrement, ladite inductance variable peut être réalisée à l'aide de deux transformateurs dont les enroulements primaires sont en série et les enroulements secondaires sont en opposition.

L'invention a également pour objet un équipement électrique de puissance comportant au moins un circuit de correction de facteur de puissance tel que décrit ci-dessus.

On décrira maintenant, à titre d'exemple non limitatif, des modes de réalisation particuliers de l'invention, en référence aux dessins schématiques annexés dans lesquels :

- la figure 1 déjà décrite est un schéma électrique d'un circuit PFC de type connu ;
- la figure 2, également déjà décrite, est un schéma par blocs du circuit de commande de l'interrupteur de la figure 1 ;
- la figure 3 est un schéma électrique de principe d'un circuit PFC élémentaire utilisé dans l'invention;
- la figure 4 est un schéma par blocs du circuit de commande de l'interrupteur de la figure 3 ;
- la figure 5 illustre le fonctionnement du circuit PFC de la figure 3 ;
- la figure 6 est un schéma électrique d'un circuit PFC élémentaire utilisé dans l'invention ;
- la figure 7 est un schéma électrique d'un circuit PFC selon l'invention ;
- la figure 8 est un schéma par blocs du circuit de commande des interrupteurs de la figure 7 ; et
- la figure 9 illustre le fonctionnement du circuit PFC de la figure 7.

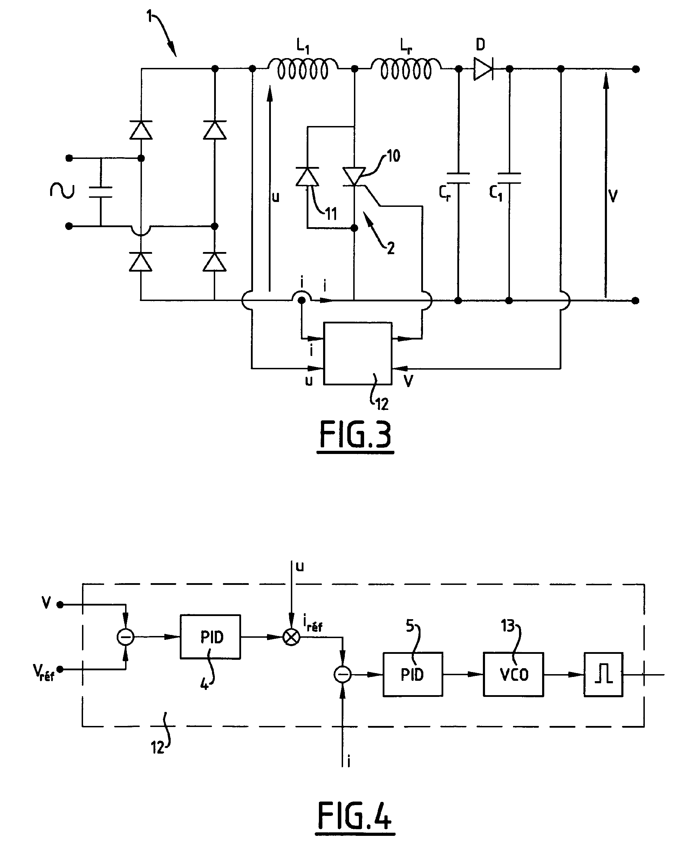

Si l'on se réfère à la figure 3, on voit que le circuit PFC élémentaire comprend en premier lieu les mêmes composants que ceux de la figure 1, dans lesquels l'interrupteur commandé 2 est formé d'un thyristor 10 et d'une diode antiparallèle 11. La figure 4 représente le circuit de commande 12 du thyristor 10, similaire au circuit de commande 3 de la figure 2 et comprenant, en sortie du régulateur 5, un oscillateur contrôlé en tension 13 (VCO ou *Voltage controlled oscillator*) qui fournit les impulsions de commande du thyristor 10.

On voit également sur la figure 3 que le circuit PFC élémentaire comprend en outre un circuit résonnant $L_r$, $C_r$ disposé entre l'interrupteur 2 et la diode D de sorte que l'inductance $L_r$ soit en série avec l'inductance $L_1$ et que le condensateur $C_r$ soit relié à la diode D du côté opposé au condensateur $C_1$. Ce circuit oscillant est utilisé pour garantir au thyristor un temps suffisant pour son ouverture pour un courant maximum $I_{L1max}$ dans l'inductance $L_1$.

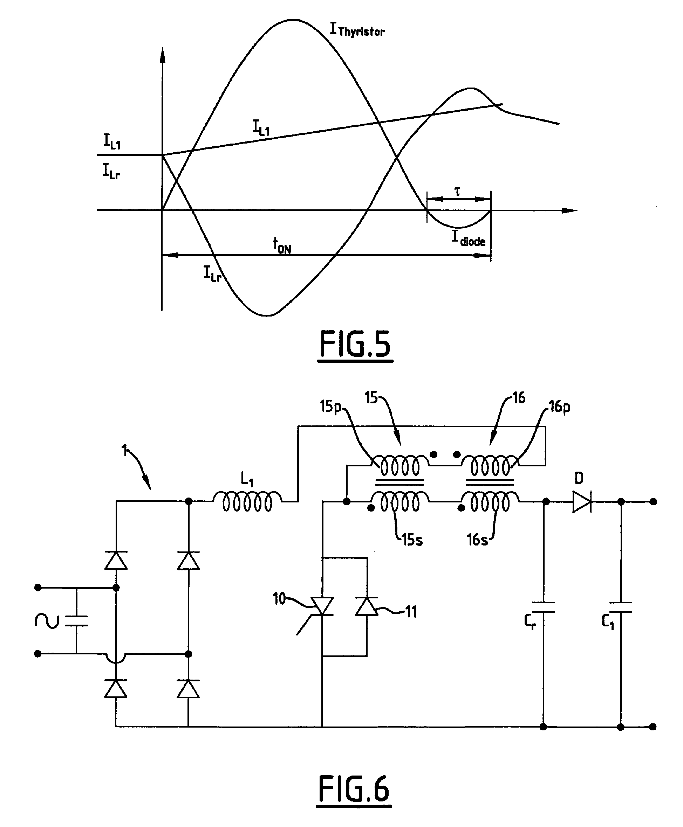

En effet, la figure 5 montre les formes d'onde de l'intensité $I_{thyristor}$ dans le thyristor, de l'intensité $I_{diode}$ dans la diode D, et des intensités $I_{L1}$ et $I_{Lr}$ dans les inductances $L_1$ et $L_r$ respectivement. La figure illustre le fait que le courant $I_{Lr}$ dans l'inductance $L_r$ est égal à la différence entre le courant $I_{L1}$ (pratiquement constant à l'échelle du phénomène) dans l'inductance $L_1$ et le courant dans le thyristor (ou dans la diode D, selon le sens). Le temps $\tau$ de conduction de la diode D doit donc être supérieur au temps de recouvrement (de désamorçage) $t_q$ du thyristor, ce qui permet à l'homme de métier de dimensionner $L_r$ et $C_r$ en prenant $t_q=t_{qmax}$, valeur que prend le temps de recouvrement pour le courant $I_{L1}$ maximum.

On constate alors que, comme mentionné précédemment, lorsque le courant d'entrée $I_{L1}$ est faible, le courant du circuit résonnant est surdimensionné et donc que le rendement est mauvais.

Une amélioration additionnelle est représentée à la figure 6.

On a remplacé ici l'inductance $L_r$ par une inductance saturable réalisée de façon connue à l'aide de deux transformateurs 15 et 16 dont les enroulements primaires 15p et 16p respectivement sont en série, et dont les enroulements secondaires 15s et 16s respectivement sont en opposition. Là encore, l'homme de métier sait calculer les paramètres des transformateurs 15 et 16.

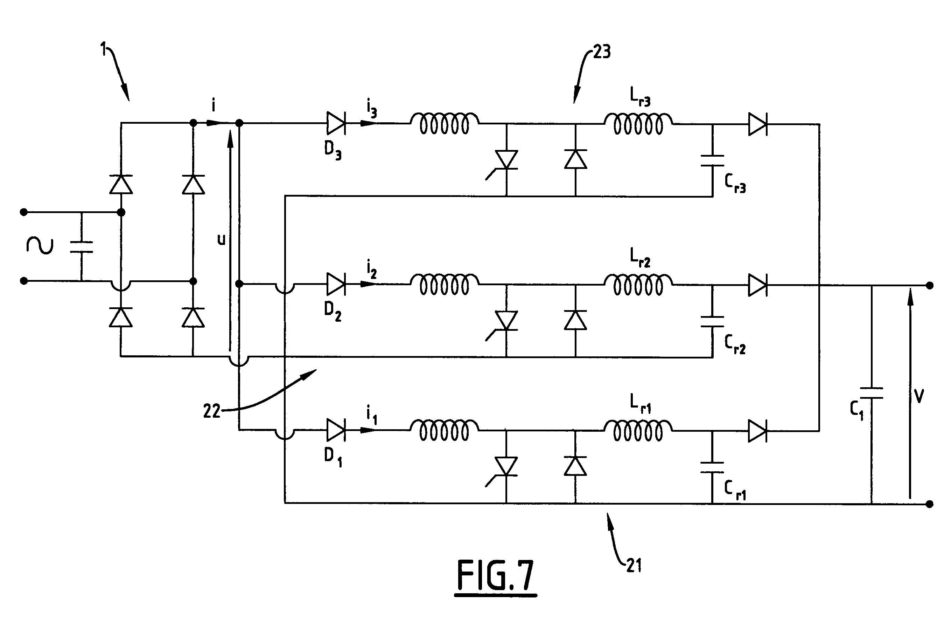

La solution pour limiter les pertes à faible tension d'entrée est illustrée aux figures 7 à 9.

On utilise ici, en sortie du pont redresseur 1, trois circuits PFC individuels 21, 22, 23 à thyristor tels que décrits ci-dessus, munis chacun d'un circuit résonnant $L_{r1}$, $C_{r1}$, $L_{r2}$, $C_{r2}$, et $L_{r3}$, $C_{r3}$ respectivement, d'annulation du courant. Ces trois circuits sont connectés en parallèle entre d'une part la sortie du pont 1 et d'autre part le condensateur de sortie commun $C_1$ pour former le circuit PFC d'ensemble.

On limite les courants dans chacun des trois circuits PFC à $i_{1max}$, $i_{2max}$, $L_{3max}$ de sorte que ces circuits fonctionnent dans des conditions optimales.

On peut choisir par exemple

$$L_{r3}=L_{r2}/2 \qquad , \qquad L_{r2}=L_{r1}/2$$

$$C_{r3}=2\,C_{r2} \qquad , \qquad C_{r2}=2\,C_{r1}$$

avec, comme courant maximum dans chacun des trois circuits PFC

$$i_{3max}=2\ i_{2max}$$

$$i_{2max}=2\ i_{1max}$$

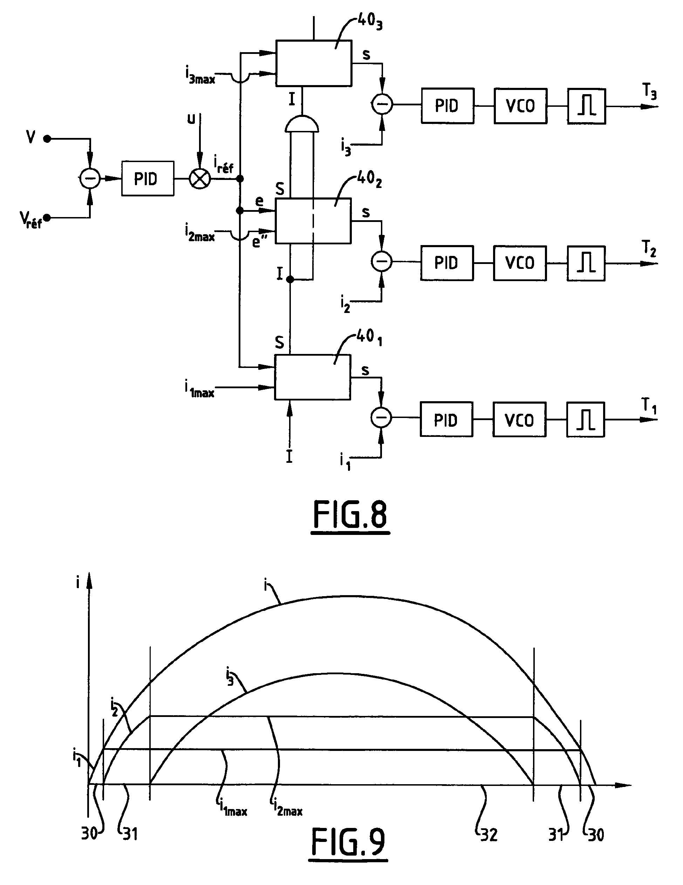

Le courant en sortie du circuit d'ensemble est représenté à la figure 9. Dans les zones 30, seul le circuit 21 est actif, les circuits 22 et 23 étant inactifs ; dans les zones 31, les circuits 21 et 22 sont actifs, le circuit 23 étant inactif ; et dans la zone 32, tous les circuits 21 à 23 sont actifs. On voit donc que

$$i=i_1 \qquad\qquad \text{pour } i<i_{1max}$$
$$i=i_{1max}+i_2 \qquad\qquad \text{pour } i_{1max}<i<i_{1max}+i_{2max}$$
$$i=i_{1max}+i_{2max}+i_3 \qquad\qquad \text{pour}$$
$$i_{1max}+i_{2max}<i<i_{1max}i_{2max}+i_{3max}$$

On a ajouté aux les circuits individuels 21 à 23 des diodes D1, D2 et D3 respectivement en série avec les inductances série $L_i$ pour éviter l'interaction entre les circuits individuels lorsque le courant $i_i$ respectif s'annule et aurait tendance à s'inverser du fait de la décharge de $C_{ri}$.

La figure 8 représente un circuit de commande fournissant les impulsions de commande des thyristors T1, T2 et T3.

La formation du signal $i_{ref}$ s'effectue de la même manière que précédemment. Ce signal est toutefois maintenant appliqué à trois chaînes de traitement parallèles de $i_1$, $i_2$, et $i_3$ pour fournir T1, T2 et T3 respectivement.

Chaque chaîne de traitement comporte un circuit logique $40_i$ qui reçoit en entrée d'une part $i_{ref}$ sur une entrée e et, d'autre part, $i_{1max}$, $i_{2max}$ et $i_{3max}$ respectivement une entrée e'. Chaque circuit logique $40_i$ possède par ailleurs une entrés I égale à 0 ou 1 selon que le circuit PFC correspondant doit être actif ou non. L'entrée I du circuit $40_2$ est élaborée comme une sortie S du circuit $40_1$ et l'entrée I du circuit $40_3$ est élaborée comme un ET des sorties S des circuits $40_1$ et $40_2$. Une sortie s de chaque circuit logique $40_i$ est ensuite utilisée et traitée comme intensité de référence ($i_{ref}$ dans les figures 2 et 4) pour élaborer T1, T2 et T3.

L'homme de métier comprendra que les circuits logiques $40_i$ doivent réaliser les fonctions logiques suivantes

$$s=\min (e, e'). I$$

et

$$S=0 \quad \text{si} \quad e\leq e' \quad , \qquad S=1 \quad \text{si} \quad e>e'$$

## Revendications

**1.** Circuit de correction de facteur de puissance, comportant au moins un circuit élémentaire (21, 22, 23) comprenant un convertisseur de type Boost comportant un interrupteur commandé par un circuit de commande (12), un premier condensateur de sortie ($C_1$) et une première inductance série d'entrée ($L_1$), une diode (D) étant connectée en série avec ladite première inductance entre l'interrupteur commandé et le condensateur de sortie, **caractérisé par le fait que** ledit interrupteur commandé est formé d'un thyristor (10) et d'une diode antiparallèle (11), des moyens ($L_r$, $C_r$) étant prévus pour garantir l'annulation du courant dans le thyristor pendant un temps suffisant à l'ouverture de ce dernier et en ce que le circuit de correction de facteur de puissance comporte une pluralité de circuits élémentaires (21, 22, 23) disposés en parallèle, les circuits élémentaires étant agencés pour pouvoir délivrer des courants de valeur croissante, les circuits de commande des thyristors des circuits élémentaires étant agencés pour rendre successivement conducteurs les différents circuits élémentaires dans l'ordre croissant des courants qu'ils sont susceptibles de délivrer.

**2.** Circuit selon la revendication 1, dans lequel lesdits moyens d'annulation du courant comprennent un circuit résonnant comportant une deuxième inductance série ($L_r$) connectée entre ladite première inductance série et la diode série, et un deuxième condensateur ($C_r$) connecté à la borne commune à ladite deuxième inductance série et à la diode série.

3. Circuit selon la revendication 1, dans lequel ladite deuxième inductance série est une inductance variable.

4. Circuit selon la revendication 3, dans lequel ladite inductance variable est réalisée à l'aide de deux transformateurs (15, 16) dont les enroulements primaires (15p, 16p) sont en série et les enroulements secondaires (15s, 16s) sont en opposition.

5. Circuit de correction de facteur de puissance selon l'une quelconque des revendications 1 à 4, dans lequel les circuits de commande des thyristors des circuits élémentaires sont agencés pour maintenir à l'état conducteur les circuits élémentaires déjà conducteurs lorsqu'un nouveau circuit élémentaire est rendu conducteur.

6. Equipement électrique de puissance, **caractérisé par le fait qu'**il comporte au moins un circuit de correction de facteur de puissance selon l'une quelconque des revendications précédentes.

## Patentansprüche

1. Leistungsfaktorkorrigierschaltung aufweisend mindestens eine Grundschaltung (21, 22, 23), die einen Wandler vom Boost-Typ mit einem Schalter, der von einer Steuerschaltung (12) gesteuert wird, einen ersten Ausgangskondensator ($C_1$) und eine erste Eingangsreiheninduktivität ($L_1$), eine Diode, die mit der ersten Induktivität zwischen den gesteuerten Schalter und den Ausgangskondensator in Reihe geschaltet ist, aufweist, dadurch charakterisiert, dass der gesteuerte Schalter durch einen Thyristor (10) und eine antiparallele Diode (11) gebildet ist, Mittel ($L_r$, $C_r$) vorgesehen sind zum Sicherstellen der Unterdrückung des Stroms in dem Thyristor während einer Zeit, die zum Öffnen des letzteren ausreicht und dadurch, dass die Leistungskorrigierschaltung eine Mehrzahl von Grundschaltungen (21, 22, 23) aufweist, die parallel angeordnet sind, wobei die Grundschaltungen derart eingerichtet sind, dass sie Ströme mit zunehmendem Wert liefern können, wobei die Thyristorsteuerschaltungen der Grundschaltungen eingerichtet sind, die unterschiedlichen Grundschaltungen nacheinander in der Reihenfolge zunehmender Ströme, die sie geeignet sind zu liefern, leitend zu machen.

2. Schaltung gemäß Anspruch 1, in dem die Stromunterdrückungsmittel einen Resonanzkreis mit einer zweiten Reiheninduktivität ($L_r$), die zwischen die erste Reiheninduktivität und die Reihendiode geschaltet ist, und einem zweiten Kondensator ($C_r$), der mit dem Anschluss verbunden ist, den die zweiten Reiheninduktivität und die Reihendiode gemeinsam haben, aufweisen.

3. Schaltung gemäß Anspruch 1, in dem die zweite Reiheninduktivität eine veränderliche Induktivität ist.

4. Schaltung gemäß Anspruch 3, in dem die veränderliche Induktivität mit Hilfe von zwei Transformatoren (15, 16), deren Primärwicklungen (15p, 16p) in Reihe sind und deren Sekundärwicklungen (15s, 16s) entgegengesetzt sind, realisiert ist.

5. Leistungsfaktorkorrigierschaltung gemäß einem der Ansprüche 1 bis 4, in dem die Steuerschaltungen der Thyristoren der Grundschaltungen eingerichtet sind, die Grundschaltungen, die schon leiten, im leitenden Zustand zu halten, wenn eine neue Grundschaltung leitend gemacht wird.

6. Elektrisches Leistungsgerät, durch die Tatsache charakterisiert, dass es mindestens eine Leistungsfaktorkorrigierschaltung gemäß einem der vorhergehenden Ansprüche aufweist.

## Claims

1. Power factor correction circuit, comprising at least one elementary circuit (21, 22, 23) having a Boost type convertor with a switch controlled by a control circuit (12), a first output capacitor ($C_1$) and a first input series inductor ($L_1$), a diode (D) being connected in series with said first inductor between the controlled switch and the output capacitor, **characterised in that** said controlled switch is provided in the form of a thyristor (10) and an antiparallel diode (11), means ($L_r$, $C_r$) being provided to guarantee cancellation of the current in the thyristor for a sufficient period to open the latter, and **in that** the power factor correction circuit has a plurality of elementary circuits (21, 22, 23) disposed in parallel, the elementary circuits being configured to enable currents of increasing value to be supplied, the control circuits of the thyristors of the elementary circuits being configured to successively render the different elementary circuits conductive in increasing order of the currents which they are intended to supply.

2. Circuit as claimed in claim 1, in which said current cancellation means comprise a resonant circuit having a second series inductor ($L_r$) connected between said first series inductor and the series diode, and a second capacitor ($C_r$) connected to the terminal common to said second series inductor and the series diode.

3. Circuit as claimed in claim 1, in which said second series inductor is a variable inductor.

4. Circuit as claimed in claim 3, in which said variable inductor is set up with the aid of two transformers (15, 16), the primary windings (15p, 16p) of which are in series and the secondary windings (15s, 16s) of which are in opposition.

5. Power factor correction circuit as claimed in any one of claims 1 to 4, in which the control circuits of the thyristors of the elementary circuits are configured to keep the elementary circuits that are already conductive in the conductive state when a new elementary circuit is rendered conductive.

6. Electric power equipment, **characterised in that** it comprises at least one power factor correction circuit as claimed in any one of the preceding claims.

## FIG.1

## FIG.2

**FIG.3**

**FIG.4**

## FIG.5

## FIG.6

**FIG.7**

FIG.8

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* US 5726872 A